# FASCICULE DE BREVET EUROPEEN

(11) **EP 2 507 189 B1**
(45) Date de publication et mention de la délivrance du brevet: **27.10.2021**
(21) Numéro de dépôt: 10801615.5
(22) Date de dépôt: 30.11.2010
(51) Int. Cl.: C04B 28/02, C04B 20/10

(54) **AGENTS INERTANTS DES ARGILES DANS DES COMPOSITIONS HYDRAULIQUES**
MITTEL ZUR INERTISIERUNG VON TON IN HYDRAULISCHEN ZUSAMMENSETZUNGEN
AGENTS FOR INERTING CLAYS IN HYDRAULIC COMPOSITIONS

(30) Priorité: 30.11.2009 FR 0958511
(43) Date de publication de la demande: 10.10.2012
(73) Titulaire: Chryso, 92440 Issy-Les-Moulineaux (FR)
(72) Inventeur: LEISING, Frédéric, F-60300 Avilly Saint Leonard (FR)
(74) Mandataire: Lavoix
(86) Numéro de dépôt international: PCT/FR2010/052576
(87) Numéro de publication internationale: WO 2011/064518

(56) Documents cités:
- WO-A2-2006/032785
- WO-A2-2006/032786
- US-A- 2 982 665
- US-A- 2 999 080
- US-A- 3 290 164
- US-A- 3 300 326
- US-A- 3 628 738
- Z. Z. ZHANG ET AL.: "Adsorption and Heat of Adsorption of Organic Compounds on Montmorillonite from Aqueous Solutions", SOIL SCI. SOC. AM. J., no. 54, 1990, pages 59-66,

## Description

La présente invention concerne des agents d'inertage des argiles présentes dans les compositions hydrauliques.

Les compositions hydrauliques sont des compositions comprenant un liant hydraulique. Un liant hydraulique est un liant qui se forme et durcit par réaction chimique avec de l'eau. A titre de liants hydrauliques peuvent être citées les compositions plâtres, sulfates et aluminates de calcium, de chaux et de ciment, qui permettent de préparer des compositions hydrauliques, notamment les mortiers et les bétons, notamment les bétons préfabriqués et les bétons prêts à l'emploi. Ces bétons peuvent être destinés notamment au bâtiment, aux ouvrages de génie civil ou à la préfabrication.

Il est connu d'ajouter aux liants hydrauliques tels que les ciments, les plâtres, les sulfates de calcium ou la chaux, des fluidifiants ou superplastifiants pour diminuer la teneur en eau de la pâte de liant hydraulique, notamment des super-plastifiants, tels que des polycarboxylates de polyoxyalkylène (PCP). De ce fait, la pâte de liant hydraulique présente, après durcissement, une structure plus dense. Ceci se traduit par une résistance mécanique plus élevée.

L'incorporation de ces adjuvants dans les compositions hydrauliques a permis une évolution technique considérable ; il reste néanmoins des difficultés liées à leur utilisation à savoir leur sensibilité aux variations de composition du béton et notamment leur sensibilité aux variations de qualité des sables et des granulats.

Ainsi la présence d'impuretés adsorbantes telles que les argiles (montmorillonite, illite, kaolinite,...) dans les compositions hydrauliques génèrent des fluctuations de propriétés, en particulier des variations de fluidité considérables, dues à une baisse de l'efficacité de ces super-plastifiants. Cette sensibilité se traduit par une augmentation du dosage nécessaire en adjuvant, ce qui peut entraîner des pertes de propriétés (résistance en compression, fissuration, durabilité...). Ce surdosage doit en outre être déterminé par des essais préalables et est ainsi source d'un coût supplémentaire.

On désigne par le terme « argiles » des silicates d'aluminium et/ou de magnésium hydratés ou non, notamment les phyllosilicates à structure en feuillets typiquement espacés d'environ 7 à environ 14 Angströms. Ce terme vise toutefois aussi des argiles d'autres types, notamment des argiles fibreuses et amorphes. Divers types d'argiles existent, qui se différencient par leur structure et le nombre de feuillets qu'elles comportent. Parmi les argiles rencontrées fréquemment dans les sables et les granulats, peuvent être mentionnées notamment la montmorillonite, l'illite, la kaolinite, la muscovite et la chlorite.

Les argiles peuvent être de type 2:1 (montmorillonite) mais aussi de type 1 :1 (kaolinite) ou 2 :1 :1 (chlorite). Les argiles les plus couramment rencontrées dans les sables, granulats et fillers calcaires entrant dans la composition des compositions hydrauliques sont la kaolinite de formule Si₂O₅Al₂(OH)₄, la montmorillonite de formule SiₐO₂₀Al₄(OH)₄ et l'illite de formule KAl₂(AlSi₃O₁₀)(OH)₂.

Ces argiles constituent une famille de solides lamellaires qui présentent la propriété remarquable d'adsorber ou d'intercaler entre leurs feuillets des molécules cationiques ou neutres.

Ainsi, la montmorillonite présente un déficit de charge qui varie entre 0,6 et 0,9 du fait de substitutions isomorphiques à la fois dans les couches tétraédriques et/ou octaédriques. La compensation électrique est assurée par l'insertion de cations plus ou moins hydratés dans l'espace interfoliaire. L'une des conséquences est qu'elle peut accueillir des molécules d'eau dans l'espace interfoliaire et constituer ce qu'on appelle une argile gonflante.

L'illite qui a la même structure cristalline diffère par le type et le nombre de substitutions. L'espace entre les feuillets est plus important chez la montmorillonite que chez l'illite où des ions K+ plus volumineux se trouvent très proche des points de substitution et sont solidement insérés entre les feuillets et empêchent par conséquent le gonflement de cette argile.

Le minerai de kaolinite est formé d'une centaine de feuillets difficilement dissociables. Les forces de cohésion présentes dans les kaolinites sont principalement de type électrostatiques, complétées par des forces d'interaction de type Van der Waals et des liaisons hydrogène entre les groupes hydroxyles d'une couche et les atomes d'oxygène de la couche adjacente. La liaison est assez forte pour empêcher tout phénomène de gonflement entre les couches.

Seule la montmorillonite est donc susceptible de donner facilement des composés d'intercalation avec des molécules polymères organiques ; ce devrait être beaucoup plus difficile avec la kaolinite et l'illite.

Selon la nature de l'argile et selon le pH du milieu, on observera donc sur ces argiles soit de l'adsorption soit de l'intercalation ou les deux phénomènes réunis.

Les adjuvants, notamment les super-plastifiants, ajoutés aux compositions organiques sont adsorbés à la surface des argiles et/ou s'intercalent entre les feuillets composant les argiles. Les super-plastifiants piégés dans les argiles ne sont alors plus à même de jouer leur rôle d'amélioration de la dispersion de suspensions aqueuses de liants hydrauliques.

Il est de par conséquent nécessaire d'inerter les argiles.

Ainsi, pour éviter l'adsorption indésirable de superplastifiants de type polycarboxylate (PCP) sur les argiles et donc une perte de leur efficacité, WO 98/58887 propose d'introduire avant l'ajout du super-plastifiant dans le mélange sable - ciment une molécule sacrificielle : des polyéthylènes glycols, ou encore de cations inorganiques ou organiques, notamment des ammoniums quaternaires, susceptibles de s'intercaler dans les feuillets des argiles. Le procédé décrit consiste à mettre en contact le sable sec avec la molécule sacrificielle par pulvérisation du produit en solution aqueuse. Cependant, il est nécessaire d'ajouter un taux élevé de polyéthylène glycol ou de cation par rapport au ciment pour retrouver la presque totalité de l'efficacité de l'adjuvant polymère.

Les documents WO2006/032785 et WO2006/032786 préconisent respectivement l'utilisation d'un polymère cationique qui peut être linéaire ou ramifié ou d'un mélange comprenant un polymère cationique et un polymère anionique. Le procédé décrit consiste à mettre en contact le sable sec avec le polymère cationique ou le mélange polymère cationique - polymère anionique par pulvérisation du produit en solution aqueuse. Les polymères cationiques proposés sont obtenus par condensation de l'épichlorhydrine avec la diméthylamine ou encore du dicyandiamide avec le formaldéhyde. Cependant, des législations de plus en plus contraignantes visent à limiter l'utilisation du formaldéhyde.

Le document EP1201617 préconise, pour augmenter la durabilité de compositions de liants hydrauliques chargées en argiles non traitées thermiquement, d'utiliser des silicates alcalins ou des sels solubles de métaux divalents ou trivalents comme le nitrate de calcium. Toutefois, les agents décrits ne donnent pas encore entière satisfaction.

Par ailleurs, Zhang et al. (SOIL. SCI. Soc. Am. J. 54, 59-66, 1990) enseigne que les anions acétate sont repoussés par les charges anioniques présentes sur l'argile de montmorillonite.

La présente demande décrit un procédé d'inertage d'argiles d'une composition hydraulique.

A cet effet, la demande décrit un procédé d'inertage d'argiles dans une composition hydraulique comprenant une étape consistant à mettre en contact une composition hydraulique ou un constituant d'une composition hydraulique avec un composé de formule (I) suivante :

R-COO⁻, (Mⁿ⁺)_{1/n} (I)

dans laquelle :
- R représente un groupe choisi parmi H, un alkyle et un phényle,
- n représente un nombre entier compris entre 1 et 5, de préférence entre 1 et 4,
- Mⁿ⁺ représente un cation choisi parmi :
- H⁺,
- un cation métallique divalent, trivalent ou tétravalent, et
- un groupe [HNR₁R₂R₃]ⁿ⁺, dans lequel R₁, R₂, et R₃ représentent indépendamment les uns des autres H ou une chaîne hydrocarbonée saturée ou insaturée, linéaire, ramifié ou cyclique, éventuellement aromatique, éventuellement substituée par un ou plusieurs substituants choisis parmi un hydroxyle et un groupe NR₄R₅, où R₄ et R₅ représentent indépendamment H ou un alkyle éventuellement substitué par un groupe NR₆R₇, où R₆ et R₇ représentent indépendamment H ou un alkyle, étant entendu que les groupes R₁, R₂, et R₃ peuvent être liés entre-eux et former avec l'atome d'azote qui les porte un cycle, de sorte que la composition hydraulique préparée comprenne de 0,005 à 2% en poids de composé de formule (I).

Au sens de la présente demande, un alkyle est un groupe aliphatique hydrocarboné, saturé, linéaire ou ramifié, éventuellement cyclique, comprenant de 1 à 8 atomes de carbone, de préférence de 1 à 4 atomes de carbone. A titre d'exemples, on peut citer les groupes méthyle, éthyle, propyle, isopropyle, butyle, isobutyle et tertiobutyle.

La chaîne hydrocarbonée comprend préférentiellement de 1 à 8 atomes de carbone, notamment de 1 à 6 atomes de carbone, de préférence de 1 à 4 atomes de carbone.

L'agent inertant des argiles de formule (I) mis en œuvre dans le procédé d'inertage est un sel composé d'un anion R-COO⁻ et d'un cation Mⁿ⁺, n représentant la charge du cation.

Les composés de formule (I) sont en effet utiles pour inerter les argiles de compositions hydrauliques, c'est-à-dire pour inhiber le gonflement des argiles, et/ou inhiber l'adsorption sur les argiles ou entre les feuillets des argiles des adjuvants utilisés dans les compositions hydrauliques, notamment les superplastifiants. Ainsi, les composés de formule (I) permettent de diminuer, voire de supprimer la perte de fluidité des compositions hydrauliques due aux argiles. Généralement, les composés selon l'invention permettent de supprimer la perte de fluidité des mortiers et bétons à base de liants cimentaires sur une période de 60 mn, notamment 90 mn, de préférence 120 mn.

Les composés de formule (I) mis en œuvre dans le procédé d'inertage présentent également les avantages suivants :
- ils permettent de réduire la quantité d'eau ou de fluidifiant nécessaire à l'obtention d'une fluidité désirée pour la composition hydraulique,
- ils sont efficaces avec différentes argiles, en particulier, les composés de formule (I) sont des agents inertants performants des argiles de type 2 :1 (montmorillonite) mais aussi de type 1 :1 (kaolinite) ou 2 :1 :1 (chlorite).
- ils ne perturbent pas les résistances mécaniques de la composition hydraulique ni à court terme ni à long terme, même en cas de surdosage,
- ils ne présentent pas d'effet retardateur de prise,
- ils sont stables dans le temps et résistent à la chaleur et au gel.

Les composés de formule (I) mis en œuvre dans le procédé d'inertage comportent un anion de formule R-COO⁻. Typiquement, R représente H ou un alkyle comportant de 1 à 4 atomes de carbone. Dans un mode de réalisation préféré, R représente H ou un méthyle. L'anion est alors l'anion formiate ou l'anion acétate. Les composés comprenant ces anions sont en effet soit commerciaux, soit faciles à préparer à partir de l'acide formique ou de l'acide acétique. Ils sont peu chers et sont particulièrement efficaces comme agents inertants.

Les composés de formule (I) mis en œuvre dans le procédé d'inertage comportent également un cation. Le cation peut être un proton. Dans ce cas, le composé est un acide carboxylique de formule RCOOH. Les acides formique ou acétique sont les composés préférés.

Le cation peut également être un cation métallique divalent, trivalent ou tétravalent. Les composés comprenant des cations monovalents sont en effet moins performants. De préférence, les cations métalliques sont bivalents ou trivalents. En effet, généralement, les sels comportant des cations métalliques bivalents ou trivalents sont moins chers que sels comportant des cations métalliques tétravalents. Les cations métalliques divalents sont typiquement des cations de métal alcalinoterreux, notamment choisis parmi les ions magnésium, calcium et baryum. L'aluminium est un exemple de cation métallique trivalent.

Le cation peut également être un groupe [HNR₁R₂R₃]ⁿ⁺ où n, R₁, R₂, et R₃ sont tels que définis ci-dessus.

Dans un mode de réalisation, R₁, R₂, et R₃ représentent H et le cation du composé de formule (I) est le cation ammonium ⁺NH₄. Dans un autre mode de réalisation, R₁ et R₂ représentent H et R₃ est différent de H. Le cation est alors un ammonium primaire. R₃ peut par exemple être un phényle, le cation étant alors l'ion anilinium. R₃ peut également représenter un alkyle linéaire ou ramifié, le cation étant alors par exemple le monoéthylammonium ou le monoisopropylammonium. Dans un autre mode de réalisation, R₃ représente H et R₁ et R₂ sont différents de H. Le cation est alors un ammonium secondaire. R₁ et R₂ peuvent notamment être des groupes alkyles. Les cations peuvent par exemple être le diéthylammonium ou le diisopropylammonium. Dans un autre mode de réalisation, R₁, R₂, et R₃ sont différents de H. Le cation est alors un ammonium tertiaire. Le triéthylammnonium ou l'éthyldiisopropylammonium sont des exemples d'ammonium tertiaire adaptés.

Dans un mode de réalisation, au moins deux des groupes R₁, R₂, et R₃ sont des chaines hydrocarbonées liées entre-elles et au moins deux des groupes R₁, R₂, et R₃ forment avec l'atome d'azote qui les porte un cycle, qui peut être saturé, insaturé ou aromatique. Les cations pyrrolidinium, pipéridinium, pyridinium sont des exemples de ces cations. Deux des groupements R₁, R₂, et R₃ peuvent être groupés et reliés à l'atome d'azote par une liaison imine, comme le cation pyridinium.

Dans un mode de réalisation, dans la formule (I) du composé utilisé comme agent inertant, au moins l'un des R₁, R₂, et R₃ représente une chaîne hydrocarbonée substituée par un hydroxyle et/ou par un groupe -NR₄R₅ tel que défini ci-dessus. Lorsque le cation [HNR₁R₂R₃]ⁿ⁺ comporte un ou plusieurs groupes -NR₄R₅, l'azote du groupe -NR₄R₅ peut être protoné (-⁺NHR₄R₅) ou non protoné.

Dans un mode de réalisation, le groupe R₃ est un groupe -(CH₂)_{q}-NR₄R₅ et le composé utilisé comme agent inertant a la formule (II) suivante :

R-COO⁻, ⁺[HR₁R₂N-(CH₂)_{q}-NR₄R₅] (II),

dans laquelle R, R₁, R₂, R₄ et R₅ sont tels que définis ci-dessus et q représente un nombre entier de 1 à 6, de préférence de 1 à 4. Lorsque le groupe -NR₄R₅ du composé de formule (II) est protoné, le composé a la formule (II') suivante :

R-COO⁻, ²⁺[HR₁R₂N-(CH₂)_{q}-NHRₐR₅]_{1/2} (II'),

dans laquelle R, R₁, R₂, R₄, R₅ et q sont tels que définis ci-dessus. De préférence, dans les composés de formule (II) ou (II'), R₁, R₂, R₄ et R₅ représentent indépendamment H ou des groupes alkyles, de préférence H ou méthyle. Les formes mono-ou di-protonées de la diéthylaminopropylamine, de la tétraméthylpropylène diamine sont des exemples de cations adaptés.

Dans un autre mode de réalisation, l'un au moins des groupes R₄ et R₅ représente un alkyle substitué par un groupe NR₆R₇, où R₆ et R₇ représentent indépendamment H ou un alkyle, notamment H ou un méthyle. Dans un mode de réalisation, le groupe R₃ est un groupe -(CH₂)_{q}-NR₄-(CH₂)ᵣ-NR₆R₇ (R₅ représente -(CH₂)ᵣ-NR₆R₇) et le composé utilisé comme agent inertant a la formule (III) suivante :

R-COO⁻, ⁺[HR₁R₂N-(CH₂)_{q}-NR₄-(CH₂)ᵣ-NR₆R₇] (III),

dans laquelle R, R₁, R₂, R₄, R₅, R₆, R₇ et q sont tels que définis ci-dessus et r représente un nombre entier de 1 à 6 de préférence de 1 à 4 (indépendamment de la valeur de q). Le cation du composé peut également être sous forme diprotoné (R-COO⁻, ²⁺[HR₁R₂N-(CH₂)_{q}-HNR₄-(CH₂)ᵣ-NR₆R₇]_{1/2} ou R-COO⁻, ²⁺[HR₁R₂N-(CH₂)_{q}-HR₄-(CH₂)ᵣ-HNR₆R₇]_{1/2}) ou triprotoné (R-COO⁻, ³⁺[HR₁R₂N-(CH₂)_{q}-HNR₄-(CH₂)ᵣ-HNR₆R₇]_{1/3}). Par exemple, les formes mono-, di- ou tri-protonées de la diméthylaminopropylaminopropylamine peuvent être utilisées comme cation.

Dans un autre mode de réalisation, au moins l'un des R₁, R₂, et R₃ représente une chaîne hydrocarbonée substituée par un hydroxyle. De préférence, au moins l'un des R₁, R₂, et R₃ représentent un alkyle substitué par un hydroxyle. Les formes protonées des aminoalcools sont en effet des cations particulièrement adaptés. Ainsi, les formes protonées de la monoéthanolamine, de la diéthanolamine, de la triéthanolamine, de la s-butyléthanolamine (commercialisée par la Société ARKEMA® sous l'appellation ALPAMINE® N41) et du 2-diméthylamino-2-méthyl-1-propanol (commercialisé par la Société ANGUS Chemical® sous l'appellation DMAMP®-80) sont des cations particulièrement adaptés.

Généralement, lorsqu'un composé de formule (I) dans laquelle Mⁿ⁺ représente HNR₁R₂R₃ est mis en œuvre dans le procédé, le pKa du cation [HNR₁R₂R₃]ⁿ⁺ est supérieur à 8, typiquement supérieur à 10, notamment supérieur à 12. Par pKa du cation, on entend le pKa du couple acide/base [HNR₁R₂R₃]ⁿ⁺/ [NR₁R₂R₃]⁽ⁿ⁻¹⁾⁺. Ces pKa sont en effet adaptés pour maintenir l'amine sous forme protonée [HNR₁R₂R₃]ⁿ⁺.

Avantageusement, le procédé d'inertage met en œuvre des composés de formule (I) solubles dans l'eau. Typiquement, les composés ont une solubilité dans l'eau supérieure à 5 g/L, voire supérieure à 10 g/L. Des composés de formule (I) comportant moins de 12 atomes de carbone, notamment moins de 10 atomes de carbone, au total (en prenant en compte le cation et l'anion) sont particulièrement préférés.

Les composés de formule (I) utiles comme agents inertants d'argiles peuvent notamment être préparés par :
- réaction des acides carboxyliques RCOOH avec des hydroxydes métalliques (hydroxyde de calcium, hydroxyde de magnésium, hydroxyde de baryum....) pour préparer les carboxylates métalliques (carboxylate de calcium, de magnésium, de baryum...),
- neutralisation d'acides carboxyliques RCOOH par une amine HNR₁R₂R₃, par exemple l'ammoniac, une amine aliphatique ou aromatique, une diamine ou une polyamine, ou un amino-alcool.

Dans un mode de réalisation, le procédé d'inertage d'argiles dans une composition hydraulique comprend l'étape consistant à mettre en contact un des constituants d'une composition hydraulique avec un composé de formule (I). Un liant hydraulique, un granulat, une addition minérale, de l'eau, un adjuvant utilisé lors de la préparation de la composition hydraulique (tel qu'un superplastifiant, un additif anti-entraînement d'air ou un fluidifiant) sont des exemples de constituants d'une composition hydraulique.

Généralement, l'argile à inerter provient du granulat, notamment du sable et/ou du filler. Parfois, le liant hydraulique comporte aussi de l'argile. C'est notamment le cas des ciments au calcaire CEM II /A-L, A-LL, B-L ou B-LL et des ciments aux pouzzolanes tels que les CEM IV ou V A ou B.

Un liant hydraulique est un liant qui se forme et durcit par réaction chimique avec de l'eau. A titre de liants hydrauliques peuvent être citées les compositions plâtres, sulfates de calcium, de chaux et de ciment.

Par « granulats », on entend un ensemble de grains minéraux de diamètre moyen compris entre 0 et 125 mm. Selon leur diamètre, les granulats sont classés dans l'une des six familles suivantes: fillers, sablons, sables, graves, gravillons et ballast (norme XP P 18-545). Les granulats les plus utilisés sont les suivants:
- les fillers, qui ont un diamètre inférieur à 2 mm et pour lesquels au moins 85 % des granulats ont un diamètre inférieur à 1,25 mm et au moins 70 % des granulats ont un diamètre inférieur à 0,063 mm,
- les sables de diamètre compris entre 0 et 4 mm (dans la norme 13-242, le diamètre pouvant aller jusqu'à 6 mm),
- les graves de diamètre supérieur à 6,3 mm,
- les gravillons de diamètre compris entre 2 mm et 63 mm.
Les sables sont donc compris dans la définition de granulat selon l'invention.
Les fillers peuvent notamment être d'origine calcaire ou dolomitique.

Par « addition minérale», on entend un matériau minéral finement divisé utilisé dans le béton afin d'améliorer certaines propriétés ou de lui conférer des propriétés particulières. La norme NF EN 206 - 1 distingue deux types d'additions minérales : les additions quasiment inertes (de type I) et les additions à caractère pouzzolanique ou hydraulique latent (de type II).
Les additions de type I sont :
   - les fillers calcaires, conformes à l'EN 12620:2000
   - les pigments, conformes à l'EN 12878
   - les additions calcaires, conformes à la norme NF P 18-508
   - les additions siliceuses, conformes à la norme NF P 18-509
Les additions de type II regroupent :
   - les cendres volantes, conformes à la norme NF EN 450
   - les fumées de silice, conformes à l'EN 13263-1

Les superplastifiants sont des adjuvants appelés «réducteurs d'eau» qui servent à diminuer la quantité d'eau nécessaire au mélange de compositions hydrauliques. Les superplastifiants suivants peuvent notamment être utilisés dans les compositions selon l'invention :
- les sels sulfonés de polycondensés de naphtalène et de formaldéhyde, couramment appelés les polynaphtalènes sulfonates ou encore les superplastifiants à base de naphtalène ;
- les sels sulfonés de polycondensés de mélamine et de formaldéhyde, appelés couramment les superplastifiants à base de mélamine ;
- les lignosulfonates ;
- les polyacrylates ;
- les produits à base d'acides polycarboxyliques, notamment les copolymères peignes polycarboxylate, qui sont des polymères ramifiés dont la chaîne principale porte des groupes carboxyliques et dont les chaînes latérales sont composées de séquences de type polyéther, en particulier le polyoxyde d'éthylène, comme par exemple le poly [acide (méth)acrylique - greffé - polyoxyde d'éthylène]. Les superplastifiants des gammes CHRYSO®Fluid Optima, CHRYSO®Fluid Premia et CHRYSO®Plast Omega commercialisés par Chryso peuvent notamment être utilisés.

Selon un aspect, l'invention a pour objet une composition hydraulique comprenant un liant hydraulique, au moins un granulat, de l'eau et un superplastifiant et comprenant en outre de 0,005 à 2% en poids d'un composé de formule (I) telle que définie ci-dessus. La composition hydraulique peut comprendre plus d'un granulat, par exemple du sable et un filler. Dans un mode de réalisation, la composition hydraulique comprend un filler, notamment un filler calcaire. Dans un mode de réalisation, la composition hydraulique comprend en outre au moins une addition minérale et/ou des adjuvants, par exemple un additif anti-entraînement d'air ou un antimousse.

La composition hydraulique comprend de 0,005 à 2 % en poids, notamment de 0,01% à 2% en poids, de préférence de 0,05 à 1,5% en poids de composé de formule (I).

Les compositions hydrauliques précitées peuvent notamment être du béton ou du mortier.

Selon un aspect, l'invention a pour objet un procédé de préparation de la composition hydraulique précitée, comprenant l'étape consistant à mélanger une composition hydraulique ou un constituant d'une composition hydraulique avec un composé de formule (I), de sorte que la composition hydraulique préparée comprenne de 0,005 à 2% en poids de composé de formule (I).

L'agent inertant de formule (I) peut en effet être mélangé à une composition hydraulique ou bien à un de ses constituants avant mise en contact avec les autres constituants pour former la composition hydraulique.

Dans le procédé d'inertage précité et le procédé de préparation d'une composition hydraulique précité, il est bien sûr possible de mettre en contact un précurseur d'un composé de formule (I) avec la composition ou un de ses constituants. Un précurseur est un composé chimique qui, mis en contact avec les autres constituants de la composition, conduit à la formation d'un composé de formule (I). Ces précurseurs peuvent notamment être :
- un acide carboxylique de formule RCOOH et un hydroxyde métallique comportant un cation métallique divalent, trivalent ou tétravalent, qui, lorsqu'ils sont mis en contact, forment un composé de formule R-COO⁻, (Mⁿ⁺)_{1/n} dans laquelle Mⁿ⁺ représente un cation métallique divalent, trivalent ou tétravalent,
- l'acide carboxylique RCOOH et une amine HNR₁R₂R₃ (où R₁, R₂, et R₃ sont tels que définis ci-dessus), qui, lorsqu'ils sont mis en contact, forment un composé de formule R-COO⁻, (Mⁿ⁺)_{1/n} dans laquelle Mⁿ⁺ représente un groupe [HNR₁R₂R₃]ⁿ⁺.

Toutefois, en général, un composé de formule (I) permet un meilleur maintien de fluidité des compositions hydrauliques que ses précurseurs. Il est généralement préférable d'utiliser un composé de formule (I) comme agent inertant que deux sels distincts, l'un comprenant l'anion R-COO⁻ et l'autre le cation Mⁿ⁺.

Le mélange d'une composition hydraulique ou d'un de ses constituants avec un composé de formule (I) ou avec ses précurseurs peut être effectué en carrière, en centrale à béton ou lors de la préparation du mortier sec.

Selon un mode de réalisation, le composé de formule (I) (ou un précurseur) est mélangé à l'eau préalablement à l'introduction de cette eau dans la composition hydraulique. Ainsi, l'invention concerne un procédé de préparation d'une composition hydraulique précitée, comprenant les étapes consistant à :
- mélanger un composé de formule (I) avec de l'eau, puis
- mélanger le mélange obtenu avec un liant hydraulique, au moins un granulat, et éventuellement un superplastifiant.

Généralement, l'eau mise en œuvre lors du mélange est de l'eau de gâchage, c'est-à-dire l'eau incorporée au mélange liant hydraulique et granulats afin de provoquer sa prise et conférer au béton sa plasticité, donc son ouvrabilité. La qualité de l'eau de gâchage doit répondre à la norme EN 206-1.

Selon un autre mode de réalisation, le composé de formule (I) (ou un précurseur) est mélangé à un superplastifiant préalablement à l'introduction de cette eau dans la composition hydraulique. Ainsi, l'invention concerne également un procédé de préparation de la composition hydraulique précitée, comprenant les étapes consistant à :
- mélanger un composé de formule (I) avec un superplastifiant, puis
- mélanger le mélange obtenu avec au moins un granulat, un liant hydraulique et de l'eau.

Selon un autre mode de réalisation, le composé de formule (I) (ou un précurseur d'un composé de formule (I)) est mélangé avec un liant hydraulique, préalablement à l'introduction de ce liant hydraulique dans la composition hydraulique. Ainsi, l'invention concerne également un procédé de préparation d'une composition hydraulique précitée, comprenant les étapes consistant à :
- mélanger un composé de formule (I) avec un liant hydraulique, puis
- mélanger le mélange obtenu avec au moins un granulat, de l'eau et éventuellement un superplastifiant.

Le liant hydraulique est de préférence du ciment. L'étape de mélange du composé de formule (I) avec du ciment peut notamment être effectuée lors du broyage du ciment.

Selon un autre mode de réalisation, le composé de formule (I) (ou un précurseur d'un composé de formule (I)) est mélangé avec un granulat, notamment en carrière, préalablement à l'introduction de ce granulat dans la composition hydraulique. Ainsi, l'invention concerne également un procédé de préparation de la composition hydraulique précitée, comprenant les étapes consistant à :
- mélanger un composé de formule (I) avec au moins un granulat, puis
- mélanger le mélange obtenu à un liant hydraulique, de l'eau, et éventuellement un superplastifiant.

La première étape permet d'inerter les argiles présentes dans le granulat avant son introduction dans la composition hydraulique, et ainsi d'obtenir un granulat prétraité, c'est-à-dire dont l'argile est inerté. Avantageusement, l'argile contenue dans le granulat prétraité est inerté par le composé de formule (I) avant ajout du granulat aux autres constituants de la composition hydraulique. Le granulat prétraité peut notamment être du sable prétraité ou un filler prétraité, notamment un filler calcaire prétraité.

Selon un aspect, la présente demande décrit également un granulat prétraité susceptible d'être obtenu par mélange d'un granulat avec un composé de formule (I) telle que définie ci-dessus. Le granulat prétraité peut notamment être du sable prétraité ou un filler prétraité, notamment un filler calcaire prétraité ou un filler dolomitique prétraité.

Ce granulat prétraité est utile pour préparer une composition hydraulique telle que définie ci-dessus. Le mélange peut être effectué soit par mélange d'un granulat avec un composé de formule (I) sous forme de poudre, soit par pulvérisation d'une solution, généralement une solution hydroalcoolique ou aqueuse, préférentiellement aqueuse, d'un composé de formule (I) sur le granulat, de préférence sec (avec une éventuelle étape de séchage après la pulvérisation).

Selon un aspect, la présente demande décrit un additif pour inertage d'argile comprenant un superplastifiant et un composé de formule (I) telle que définie ci-dessus.

L'additif pour inertage d'argile préféré comprend un composé de formule (I) telle que définie ci-dessus et un superplastifiant polycarboxylate de polyoxyalkylène (PCP).

Selon un aspect, l'invention a pour objet l'utilisation de 0,005 à 2% en poids d'un composé de formule (I) telle que définie ci-dessus pour inerter les argiles de compositions hydrauliques.

Selon un aspect, la présente demande décrit l'utilisation d'un granulat prétraité tel que défini ci-dessus, notamment d'un sable prétraité ou d'un filler prétraité, pour inerter les argiles de compositions hydrauliques.

Selon un aspect, la présente demande décrit l'utilisation d'un additif d'inertage d'argile tel que défini ci-dessus pour inerter les argiles de compositions hydrauliques.

### EXEMPLES

Afin d'évaluer la performance des composés en tant qu'agents inertant des argiles, l'ouvrabilité des compositions mortiers ou bétons confectionnées avec des granulats ou fillers naturellement argileux ou additionnés de 1% de montmorillonite et additivées d'agent inertant, a été évaluée par mesure du diamètre d'étalement (« slump flow » en anglais). Les valeurs au bleu de méthylène des granulats et fillers mentionnées dans les exemples sont représentatives des quantités d'argiles qu'ils contiennent. Les agents inertants d'argiles ont été évalués en tant que :
- Agents de prétraitement de sable : l'agent est introduit avec l'eau de pré-mouillage,
- Additif neutralisant d'argile : l'agent est introduit avec l'eau de gâchage.

Les agents inertants d'argiles ont été évalués sur des formules classiques de béton auto-plaçants et de mortier de béton équivalent.

Toutes les expériences dont les résultats sont indiqués dans un même tableau ont été effectuées avec la même proportion de superplastifiant, sauf indication contraire.

Par « eau de prémouillage », on entend une partie de l'eau totale, qui sert à humidifier les granulats avant le gâchage permettant de simuler l'état hygrométrique des granulats, souvent humide, dans une usine à béton ou sur le chantier.

### EXEMPLE 1 : Effet de l'ajout d'agent inertant dans des compositions hydrauliques

### Composition des formules d'évaluation

**Formule mortier** : Tous les agents inertants ont été évalués dans la formule mortier ci-dessous dans laquelle les sables exempts d'argiles ont été totalement ou partiellement remplacés par des sables naturellement argileux ou de sables propres additionnés d'argile. Les différents constituants de la formule mortier sont exprimés en g.

| | |
|---|---|
| CEM I 52,5 N LE HAVRE (ciment) | 624,9 |
| Betocarb P2 ERBRAY (filler calcaire) | 412,1 |
| FULCHIRON (sablon) | 587,7 |
| Sable normalisé AFNOR | 1350 |
| Eau totale | 375,1 |

Le ciment CEMI 52.5N Le Havre a été fourni par la Société Lafarge, le filler Erbray par la Société Omya, le sablon Fulchiron par la Société Fulchiron (avec une valeur au bleu de méthylène de 0.5 g/kg) et le sable normalisé par la Société Nouvelle du Littoral (avec une valeur au bleu de méthylène inférieure à 0.2 g/kg).

Des superplastifiants CHRYSO®Fluid Optima 203, 224 ou 300 (CHRYSO) ont été utilisés avec des taux variables de superplastifiant par rapport au poids de liant total (filler + ciment = 1037 g) permettant d'atteindre un étalement cible de 320 mm + ou - 20 mm.

Le pourcentage d'argile (p/p) est exprimé par rapport au sable total à savoir sable AFNOR et FULCHIRON (sablon). La montmorillonite KSF utilisée dans les essais est commercialisée par ALDRICH®.

**Formule béton** : Les agents inertants ont été évalués dans la formule béton ci-dessous, dans laquelle le sable 0/4 Bernière a été additionné de montmorillonite ou substitué partiellement par différents sables argileux.

Les différents constituants de la formule béton sont exprimés en kg/m³

| | |
|---|---|
| Ciment CEM I 52.5N CP2 SAINT PIERRE LA COUR (Lafarge) | 280 |
| Filler calcaire Betocarb P2 ERBRAY (OMYA) | 160 |
| Sable 0/4 de BERNIERES | 900 |
| Gravier 4/10 de VILLERMAIN | 165 |
| Gravier 8/16 LOIRE | 663 |
| Eau totale | 200 |

Des superplastifiants CHRYSO®Fluid Optima 203, 224 ou 300 (CHRYSO) ont été utilisés. La montmorillonite KSF utilisée dans les essais est commercialisée par ALDRICH.

### Préparations des formules pour essais mortier et béton

**Pour essais mortier** : Le ciment utilisé est le CEM I 52,5N CE CP2 NF® de l'usine du Havre (Lafarge), et le super-plastifiant utilisé est le CHRYSO®Fluid Optima 224.

La formule mortier de référence est préparée selon la procédure de malaxage suivante :
- les sables (0/2 AFNOR® + 0/1 Fulchiron®) (le mélange constituant un sable propre) sont mélangés à sec dans un mélangeur type Perrier® à petite vitesse pendant 30 secondes avant introduction de l'eau de pré-mouillage et le malaxage se poursuit pendant encore 30 secondes,
- après avoir laissé le mélange (sable+eau) se reposer pendant 4 minutes, on ajoute le ciment et le filler puis on mélange pendant 1 minute à petite vitesse,
- ensuite on ajoute en 30 secondes l'eau de gâchage avec le super-plastifiant et on mélange à petite vitesse pendant 90 secondes,
- on arrête le mélangeur pour racler les parois du bol de malaxage à l'aide d'une raclette souple pendant 30 secondes. Enfin on mélange à grande vitesse (289 tr/min) pendant 1 minute.

### Cas des sables naturels argileux

La procédure de malaxage susmentionnée a été suivie en remplaçant le sable propre par un sable argileux. La mesure de l'étalement à 5 minutes a été réalisée dans les 30 secondes qui ont suivi la fin du malaxage.

### Cas des sables additionnés d"argile

La procédure de malaxage susmentionnée a été suivie en remplaçant le sable propre par un sable argileux, c'est-à-dire un sable initialement propre qui a été pollué par une argile (montmorillonite). Le mortier est préparé comme indiqué ci-dessus, sauf que la quantité de filler est diminuée de la teneur en argile ajoutée, afin de conserver le taux de fines constant dans la composition. Les expériences ont été réalisées avec 1% d'argile ajouté, ce qui correspond à un pourcentage usuel d'argiles dans la plupart des sables.

Le sable argileux est préparé par mélange d'un sable d'une granulométrie de 0 à 2 mm issu d'un mélange de deux sables propres : sable 0/1 Fulchiron® et sable normalisé 0/2 AFNOR® possédant des valeurs au bleu de méthylène respectivement de 0,5 g/kg et inférieure à 0,2 g/kg (test selon Norme NF-EN 933-9), avec 1% en poids de montmorillonite et l'eau de pré-mouillage à petite vitesse (142 tr/min).

La mesure de l'étalement à 5 minutes a été réalisée dans les 30 secondes qui suivent la fin du malaxage.

**Pour essais béton** : L'évaluation des agents inertants des argiles a été réalisée dans une formulation de béton auto-plaçant de type béton prêt à l'emploi dans laquelle le sable propre a été remplacé par du sable argileux ou additionné d' 1% en poids de montmorillonite KSF. L'efficacité des agents inertants d'argiles a été examinée comparativement à la formule avec sable propre non additionné de montmorillonite. Le ciment utilisé est le CEM I 52,5N CE CP2 NF de l'usine de Saint Pierre La Cour (Lafarge). Le super-plastifiant CHRYSO® Fluid Optima 224 a été dilué dans l'eau jusqu'à une concentration de 20%, son pH est établi à une valeur entre 5 et 6 à l'aide de soude. Un additif anti-entraînement d'air est également ajouté afin d'éliminer toute influence de bulles piégées sur la rhéologie de pâte. L'agent inertant d'argiles a été introduit dans la gâchée avec l'eau de gâchage. La formule béton de référence est préparée selon la procédure de malaxage suivant :
- les granulats (sables et gravillon) sont mélangés à sec dans un mélangeur type Rayneri® à petite vitesse pendant 30 secondes avant d'introduire l'eau de pré-mouillage (1/3 de la quantité totale de l'eau totale) et continuer le malaxage jusqu'à 1 minute,
- après avoir laissé le mélange des granulats pré-humidifiés se reposer pendant 4 minutes, on ajoute le ciment et le filler puis on mélange pendant 1 minute à petite vitesse,
- ensuite on ajoute en 30 secondes l'eau de gâchage avec le super-plastifiant et on mélange à petite vitesse pendant 1 minute et 30 secondes.

### Mesures rhéologiques.

L'ouvrabilité des mortiers a été évaluée par mesure d'étalement (mesure de diamètre de la flaque de mortier formée sur une plaque plane après écoulement. Essai inspiré de la norme PR NF EN 12350-8) selon le mode opératoire suivant. Le cône utilisé et une reproduction à l'échelle ½ du cône d'Abrams (voir NF P 18-451, 1981) :
Diamètre du cercle de base supérieur : 50 ± 0,5 mm
Diamètre du cercle de base inférieure : 100 ± 0,5 mm
Hauteur : 150 ± 0.5 mm
Les dimensions de la plaque d'étalement doivent être supérieures ou égales à 600 x 600 mm².

On verse le mortier ou le béton dans le cône de façon continue et on arase l'excès de mortier en surface du cône. Pour effectuer l'étalement on soulève le cône perpendiculairement à la plaque en faisant un quart de tour. A l'aide d'une spatule souple, on récupère le mortier collé sur les parois intérieures du cône tout en restant proche de la surface de la galette formée afin de ne pas forcer l'étalement de la galette. Après avoir attendu que le mortier ou le béton se mette en place et ait atteint sont étalement maximal, on détermine le diamètre moyen (à ±1mm) de la galette en effectuant 3 mesures (selon des axes formant 120 degrés entre eux). L'ouvrabilité des bétons a été évaluée selon le projet de norme PR NF EN 12350-8. Les essais ont été réalisés à 20°C. L'étalement a été mesuré à 5, 30, 60 et 90 minutes selon 2 diamètres à 90°. Dans les expériences ci-après, T₀ correspond à l'instant où le ciment est ajouté aux granulats humides.

Plus le résultat de la mesure rhéologique est proche de la référence (béton ou mortier comprenant un sable exempt d'argile), plus l'agent inertant est performant. Le rôle des agents inertants est en effet d'obtenir une fluidité pour des compositions hydrauliques comprenant des argiles identique à celle obtenue pour une composition exempte d'argile.

### EXEMPLE 1a : Résultats avec des essais mortiers avec du sable propre ou additionné d'argile

Les performances de différents agents inertants selon l'invention ont été testées. Le superplastifiant CHRYSO®Fluid Optima 203 a été utilisé dans les compositions de l'exemple 1a (avec une concentration massique identique pour les tests dont les résultats sont regroupés dans un même tableau).

Des acides carboxyliques de faible masse molaire ont été examinés : acides formique, et acide acétique (R représente H ou Me et Mⁿ⁺ représente H dans la formule (I) selon l'invention). Le tableau 1 fournit les résultats des mesures rhéologiques. Les pourcentages sont exprimés en % par rapport au poids de sable total (p/p).

**Tableau 1 : résultats des mesures rhéologiques avec R = H ou Me.**

| Agent inertant | % argile (montmorillonite) | % inertant | Etalement [mm] | | | | |
|---|---|---|---|---|---|---|---|
| | | | T 5 mn | T 30 mn | T 60 mn | T 90 mn | T 120 mn |
| référence | 0 | 0 | 320 | 395 | 400 | 395 | 390 |
| Sans inertant | 1 | 0 | 245 | Plus mesurable | - | - | - |
| HCOOH | 1 | 0,1 | 340 | 340 | 320 | 300 | 270 |
| MeCOOH | 1 | 0,1 | 310 | 340 | 330 | 310 | 295 |

Dans les expériences suivantes, les agents inertants ont la formule (I) dans laquelle R représente un méthyle (l'anion est un acétate) et Mⁿ⁺ représente H ou un groupe [HNR₁R₂R₃]ⁿ⁺.

Les acétates de d'amino-alcools ont été préparés par mélange équimolaire d'acide acétique et d'amino-alcool. La monoéthanolamine est commercialisée par la Société BASF®, les diéthylaminopropylamine (DEAPA), éthyldiisopropylamine (EDIPA), diisopropylamine (DIPA) et la s-butyl monoéthanolamine (ALPAMINE N41®) commercialisées par la Société ARKEMA®. Le diméthylaminoéthylpropanol examiné est commercialisé par la Société ANGUS Chemical®. Ces agents inertants ont été mis en solution aqueuse (teneur en matière active (concentrations en g pour 100 g de solution) de 72% pour l'acétate d'ammonium, de 81% pour l'acétate de monoéthanolamine, de 86% pour l'acétate d'éthyldiisopropylamine et de 73% pour l'acétate de diisopropylamine. Les tableaux 2 et 3 fournissent les résultats des mesures rhéologiques. Les pourcentages sont exprimés en % par rapport au poids de sable total (p/p).

**Tableau 2 : résultats des mesures rhéologiques avec Mⁿ⁺ = H ou [HNR₁R₂R₃]ⁿ⁺.**

| Agent inertant | % argile (montmorillonite) | % inertant | Etalement [mm] | | | | |
|---|---|---|---|---|---|---|---|
| | | | T 5 mn | T 30 mn | T 60 mn | T 90 mn | T 120 mn |
| référence | 0 | 0 | 320 | 395 | 400 | 395 | 390 |
| Sans inertant | 1 | 0 | 245 | - | - | - | - |
| MeCOOH | 1 | 0,2 | 345 | 360 | 330 | 335 | 315 |
| MeCOONH4 | 1 | 0,2 | 345 | 380 | 370 | 355 | 330 |
| MeCOO [H₃N-(CH₂)₂-OH] | 1 | 0,2 | 370 | 400 | 390 | 375 | 360 |
| MeCOO[H₂N(s-Bu)-(CH₂)₂-OH] | 1 | 0,2 | 360 | 380 | 370 | 355 | 330 |

| | | | | | | | |
|---|---|---|---|---|---|---|---|
| (s-Bu = s-butyle) | | | | | | | |

**Tableau 3 : résultats des mesures rhéologiques avec Mⁿ⁺ = [HNR₁R₂R₃]ⁿ⁺.**

| Agent inertant | % argile (montmorillonite) | % inertant | Etalement [mm] | | | | |
|---|---|---|---|---|---|---|---|
| | | | T 5 mn | T 30 mn | T 60 mn | T 90 mn | T 120 mn |
| référence | 0 | 0 | 335 | 395 | 385 | 375 | 370 |
| Sans inertant | 1 | 0 | 280 | 300 | 300 | 290 | 275 |
| MeCOONH4 | 1 | 0,2 | 360 | 380 | 360 | 350 | 330 |
| MeCOO[HEt₂N-(CH₂)₃-NH₂] | 1 | 0,2 | 370 | 380 | 360 | 360 | 335 |
| MeCOO[HNEt(*i*-Pr)₂] | 1 | 0,2 | 350 | 360 | 330 | 330 | 305 |
| MeCOO[HMe₂N-C(CH₃)₂-CH₂-OH] | 1 | 0,2 | 340 | 360 | 340 | 330 | 320 |

Des expériences ont également été réalisées en utilisant des cations métalliques divalents (ion métallique alcalino-terreux). L'acétate de calcium et acétate de magnésium sont des produits (poudres) commercialisés par la Société KEMIRA® (NL) et distribués en France par IMCD®. Ces agents inertants ont été mis en solution aqueuse, à des concentrations massiques de 20% pour l'acétate de calcium, 25% pour l'acétate de magnésium. Le tableau 4 fournit les résultats des mesures rhéologiques. Les pourcentages sont exprimés en % par rapport au poids de sable total (p/p).

**Tableau 4 : résultats des mesures rhéologiques avec Mⁿ⁺ = H ou cation métallique.**

| Agent inertant | % argile (montmorillonite) | % inertant | Etalement [mm] | | | | |
|---|---|---|---|---|---|---|---|
| | | | T 5 mn | T 30 mn | T 60 mn | T 90 mn | T 120 mn |
| référence | 0 | 0 | 320 | 495 | 400 | 395 | 390 |
| Sans inertant | 1 | 0 | 245 | Plus mesurable | - | - | - |
| MeCOOH | 1 | 0,2 | 345 | 360 | 335 | 315 | 300 |
| MeCOO(Ca)_{1/2} | 1 | 0,2 | 335 | 380 | 370 | 350 | 330 |
| MeCOO(Mg)_{1/2} | 1 | 0,2 | 360 | 370 | 370 | 355 | 335 |

Les résultats des tableaux 1-4 démontrent que les composés de formule (I) sont des agents inertants des argiles performants.

Les performances de l'agent inertant (MeCOO⁻)₂Mg²⁺ ont également été comparées à celles obtenues lorsque MgCl₂ d'une part (comprend des ions Mg²⁺) et l'acide acétique MeCOOH d'autre part sont utilisés séparément (essais de type mortier). Le tableau 5 fournit les résultats des mesures rhéologiques. Les pourcentages sont exprimés en % par rapport au poids de sable total (p/p).

**Tableau 5 : résultats des mesures rhéologiques.**

| Agent inertant | % argile (montmorillonite) | % inertant | Etalement [mm] | | | | |
|---|---|---|---|---|---|---|---|
| | | | T 5 mn | T 30 mn | T 60 mn | T 90 mn | T 120 mn |
| référence | 0 | 0 | 320 | 395 | 400 | 395 | 390 |
| Sans inertant | 1 | 0 | 245 | Plus mesurable | - | - | - |
| MgCl₂ | 1 | 0,1 | 345 | 330 | 320 | 300 | 270 |
| MeCOOH | 1 | 0,1 | 310 | 340 | 330 | 310 | 295 |
| MeCOO(Mg)_{1/2} | 1 | 0,1 | 340 | 355 | 345 | 325 | 305 |

L'association anion carboxylate - cation métallique est plus performante en terme de maintien de fluidité des compositions hydrauliques préparées en présence de sable additionné d'argile que les constituants de ces mélanges (acide carboxylique et sel métallique) pris séparément. Cette performance optimale semble résulter d'un effet synergétique entre l'anion carboxylate et le cation métallique.

### EXEMPLE 1b : Résultats avec des essais mortiers avec du sable comprenant naturellement des argiles

Le sable de RHEU (Société LAFARGE) est particulièrement riche en argiles (valeur au bleu de méthylène de 4.2 g/kg), il est difficile de l'utiliser comme seul sable et d'obtenir une composition hydraulique présentant une fluidité satisfaisante. Il est de ce fait souvent utilisé en mélange avec d'autres sables. Dans les expériences suivantes, la mention « sable du RHEU » signifie en fait un mélange 30% de sable de RHEU et 70% de sable FULCHIRON - Les pourcentages sont exprimés en % par rapport au poids de sable total (p/p). Le superplastifiant CHRYSO®Fluid Optima 203 a été utilisé dans les compositions de l'exemple 1b (avec une concentration massique identique dans les différents tests).

**Tableau 6 : résultats des mesures rhéologiques.**

| Agent inertant | % agent inertant | Etalement [mm] | | | | |
|---|---|---|---|---|---|---|
| | | T 5 mn | T 30 mn | T 60 mn | T 90 mn | T 120 mn |
| Référence sans sable de RHEU | 0 | 320 | 395 | 400 | 395 | 390 |
| Référence avec sable de RHEU | 0 | 230 | 280 | 265 | 250 | 225 |
| MeCOOH | 0,1 | 240 | 305 | 285 | 265 | 240 |
| | 0,2 | 210 | 325 | 295 | 285 | 260 |
| | 0,3 | 285 | 315 | 300 | 275 | 250 |
| MeCOO(Ca)_{1/2} | 0,3 | 200 | 310 | 295 | 275 | 240 |
| | 0,2 | 220 | 320 | 295 | 275 | 250 |
| | 0,05 | 235 | 295 | 275 | 260 | 230 |
| MeCOONH₄ | 0,2 | 260 | 355 | 340 | 320 | 295 |
| MeCOO(Mg)_{1/2} | 0,2 | 290 | 355 | 345 | 320 | 305 |

Ces résultats montrent que les quatre agents inertant d'argiles étudiés permettent de compenser partiellement l'effet néfaste des argiles contenues dans le sable du RHEU. Les acétates de magnésium et d'ammonium se révèlent être les plus performants pour inhiber les argiles du sable du RHEU.

### EXEMPLE 1c : Résultats en utilisant un autre ciment

Dans les formulations mortier de référence ci-dessous, le ciment du HAVRE a été substitué par le ciment de SAINT-PIERRE LA COUR (LAFARGE). Les pourcentages sont exprimés en % par rapport au poids de sable total (p/p). Le superplastifiant CHRYSO®Fluid Optima 206 a été utilisé dans les compositions de l'exemple 1c (avec une concentration massique identique dans les différents tests).

**Tableau 7 : résultats des mesures rhéologiques.**

| Agent inertant | % agent inertant | Etalement [mm] | | | | |
|---|---|---|---|---|---|---|
| | | T 5 mn | T 30 mn | T 60 mn | T 90 mn | T 120 mn |
| Référence | 0 | 290 | 310 | 315 | 315 | 295 |
| Référence +1% montmorillonite | 0 | 165 | 150 | - | - | - |
| MeCOO(Ca)_{1/2} | 0,5 | 260 | - | - | - | - |
| | 0,6 | 245 | 310 | 290 | 275 | 235 |
| MeCOOH | 0,5 | 260 | - | - | - | - |
| MeCOONH4 | 0,2 | 220 | 190 | - | - | - |
| | 0,5 | 320 | 330 | 315 | 310 | 295 |
| MeCOO(Mg)_{1/2} | 0,05 | 225 | 195 | - | - | - |
| | 0,2 | 330 | 300 | 290 | 285 | 270 |

Les agents inertants acétate de calcium, d'ammonium et de magnésium permettent également de réduire les effets indésirables liés à la présence d'argiles dans des formulations mortiers à base de ciment de SAINT-PIERRE LA COUR.
Les composés sont donc considérés robustes vis-à-vis des variations de composition des ciments.

### EXEMPLE 1d : Résultats avec des essais béton

L'acétate de calcium et l'acétate de magnésium sont des produits (poudres) commercialisés par la Société KEMIRA® (NL) et distribués en France par IMCD®. L'acétate de monoéthanolamine a été préparé par mélange équimolaire d'acide acétique et de monoéthanolamine.

Ces agents inertants ont été mis en solution aqueuse, à des concentrations massique de 20% pour l'acétate de calcium, 25% pour l'acétate de magnésium et 81% pour l'acétate de monoéthanolamine. Ils ont été utilisés à des taux de 0,2 et 0,4% en poids sec par rapport au poids du sable.
Le sable propre utilisé est le sable BERNIERE. Dans les expériences suivantes, la mention « sable du RHEU » signifie en fait un mélange 30% de sable de RHEU et 70% de sable BERNIERE.

L'influence de la qualité du sable pour des agents inertants acétate (R représente un méthyle) de calcium (Mⁿ⁺ représente Ca²⁺), de magnésium (Mⁿ⁺ représente Mg²⁺) ou de monoéthanolamine (Mⁿ⁺ représente ⁺H₃NCH₂CH₂OH) a été testée. Le tableau 8 fournit le résultat des mesures rhéologiques. Le superplastifiant CHRYSO®Fluid Optima 224 a été dosé de façon à avoir un étalement de 700 mm + ou - 20 mm (avec une concentration massique identique dans les différents tests).

**Tableau 8 : résultats des mesures rhéologiques.**

| sable | % agent inertant | | | Etalement [mm] | | |
|---|---|---|---|---|---|---|
| | (MeCOO)₂Ca | (MeCOO)₂Mg | MeCOO⁻ , ⁺H₃NCH₂CH₂OH | T 5 mn | T 30 mn | T 60 mn |
| Propre (témoin) | - | - | - | 690 | 670 | 675 |
| Propre | 0,2 | - | - | 730 | 775 | - |
| Propre + 1% montmorillonite (=sable additionné d'argile) (témoin) | - | - | - | 570 | 525 | 530 |
| Propre + 1% montmorillonite | 0,2 | - | - | 695 | 690 | 670 |
| Lillion (témoin) | - | - | - | 550 | 530 | - |
| Lillion | 0,2 | - | - | 660 | 650 | 660 |
| Lillion | - | - | 0,2 | 680 | 660 | 655 |
| Lauzach (témoin) | - | - | - | 595 | 580 | - |
| Lauzach | 0,2 | - | - | 670 | 670 | 680 |
| Sable du Rheu (témoin) | - | - | - | 460 | 445 | - |
| Sable du Rheu | 0,2 | - | - | 565 | 515 | 485 |
| Sable du Rheu | 0,4 | - | - | 620 | - | - |
| Sable du Rheu | - | 0,2 | - | 595 | 555 | - |
| Sable du Rheu | - | 0,4 | - | 635 | 625 | |
| Sable du Rheu | - | - | 0,2 | 595 | 525 | 535 |
| Sable du Rheu | - | - | 0,4 | 635 | 535 | 495 |

A la lecture de ces résultats, on conclut que :
- un taux d'agent inertant compris entre 0,2 et 0,25% en sec par rapport au poids de sable permet de neutraliser l'effet néfaste des argiles contenues dans les sables étudiés,
- l'acétate de magnésium paraît légèrement plus efficace que l'acétate de calcium.

### EXEMPLE 1e: Ajout d'agent inertant des argiles dans un mortier contenant un filler calcaire argileux

La composition mortier est identique à celle de l'exemple 1. Les modes opératoires de préparation des compositions hydrauliques sont similaires à ceux de l'exemple 1 en remplaçant les constituants par ceux des deux listes ci-dessus et le superplastifiant par du CHRYSO®Fluid Prémia 100 commercialisé par la Société CHRYSO (avec une concentration massique identique dans les différents tests).

Le filler calcaire est soit le filler Void® fourni par la société Carmeuse (exempt d'argiles, il sert de référence), soit un filler calcaire naturellement argileux (filler Les Aucrais® commercialisé par la société Carmeuse) dont la valeur au bleu est de 2.66 g/kg.

L'agent inertant utilisé, à savoir l'acétate de magnésium en solution aqueuse à 25% massique, a été introduit avec l'eau de prémouillage dans le mélange des sables et du filler. L'agent inertant a été utilisé à des taux de 0,2 et 0,4% en poids sec par rapport au poids du filler calcaire. Les mesures rhéologiques ont été réalisées en suivant le même protocole que celui décrit à l'exemple 1.

Le tableau 9 fournit les résultats des mesures rhéologiques. Dans l'exemple suivant, le pourcentage d'inertant est exprimé en % en poids par rapport au poids de filler calcaire (p/p).

**Tableau 9 : résultats des mesures rhéologiques.**

| Filler | % (MeCOO)₂Mg (/ filler) | Etalement (mm) | |
|---|---|---|---|
| | | T 5 mn | T 30 mn |
| Voïd® | - | 320 | 255 |
| Aucrais® | - | 220 | 170 |
| Aucrais® | 0,2% | 270 | 200 |
| Aucrais® | 0,4% | 280 | 210 |

L'introduction d'acétate de magnésium au taux de 0,2% ou 0,4% en poids par rapport au filler calcaire a un effet sensible sur l'inertage des argiles contenues dans le filler calcaire.

### EXEMPLE 1f : Ajout d'agent inertant des argiles dans un béton contenant un filler calcaire argileux et un granulat argileux

La composition du béton est la suivante :

| **Composition Béton** | **gâchée (30 kg)** |
|---|---|
| CEM II /A S 42,5 N | 4,19 |
| FILLER TDKS (F) | 2,75 |
| 0/2 RHIN | 10,38 |
| 4/8 MOSELLE (G1) | 4,45 |
| 8/16 MOSELLE (G2) | 5,73 |
| EAU TOTALE | 2,38 |

L'agent inertant utilisé est l'acétate de monoéthanolamine. Le super-plastifiant utilisé dans la formulation est CHRYSO®Fluid Optima 203 commercialisé par la Société CHRYSO (avec une concentration massique identique dans les différents tests). Le tableau 10 fournit les résultats des mesures rhéologiques. Les pourcentages sont exprimés par rapport au poids de liant total (filler et granulats G1 et G2).

**Tableau 10 : résultats des mesures rhéologiques.**

| % superplastifiant | % MeCOO[H₃N-(CH₂)₂-OH] | Etalement (mm) | | | | |
|---|---|---|---|---|---|---|
| | | T 5 mn | T 30 mn | T 60 mn | T 90 mn | T 120 mn (±10mn) |
| 1% | - | 640 | 625 | 565 | - | - |
| | 0,2% | 700 | 675 | 645 | - | - |
| 0,9% | - | 520 | 500 | 450 | 400 | 350 |
| | 0,2% | 655 | 615 | 535 | 495 | 435 |

L'utilisation de 0,2% d'acétate de monoéthanolamine permet d'atténuer l'effet néfaste des argiles contenues dans le filler (valeur au bleu de méthylène de 2,66 g/kg) et dans les fines des granulats (valeur au bleu de méthylène de 3,3 - 5 g/kg) de la composition du béton (l'étalement passe de 520 mm à 655 mm).

### EXEMPLE 2 : Détermination des résistances en compression de compositions hydrauliques comprenant les agents inertants selon l'invention

Les bétons ont été préparés en suivant les protocoles décrits à l'exemple 1 en utilisant le superplastifiant CHRYSO®Fluid Optima 224 (avec une concentration massique identique dans les différents tests).

La résistance précoce a été évaluée par mesure de la résistance à la compression Rc d'éprouvettes cubiques 15x15x15 cm³ de béton à l'échéance de 24 heures selon la norme EN 12390-3. Le tableau 11 fournit les résultats obtenus.

**Tableau 11 : résultats des mesures de résistance à la compression.**

| Sable | % Agent inertant / Sable (p/p) | | Résistance en compression (en MPa) |
|---|---|---|---|
| | (MeCOO)₂Ca | MECOO⁻, ⁺H₃NCH₂CH₂OH | |
| Propre (témoin) | - | - | 13,9 |
| Propre | 0,2 | - | 12,4 |
| Lillion (témoin) | - | - | 14,5 |
| Lillion | 0,2 | - | 13 |
| Lillion | - | 0,2 | 13,3 |
| Lozach (témoin) | - | - | 15,5 |
| Lozach | 0,2 | - | 12,1 |
| du Rheu (témoin) | - | - | 14,8 |
| du Rheu | 0,2 | - | 13,8 |
| du Rheu | 0,4 | - | 12,7 |

Ces expériences montrent que la présence d'agents inertants selon l'invention n'affecte quasiment pas la résistance des bétons obtenus. Les propriétés mécaniques du béton sont conservées.

## Revendications

1. Procédé de préparation d'une composition hydraulique comprenant une étape consistant à mettre en contact une composition hydraulique ou un constituant d'une composition hydraulique avec un composé de formule (I) suivante :
R-COO⁻, (Mⁿ⁺)_{1/n} (I)
dans laquelle :
- R représente un groupe choisi parmi H, un alkyle et un phényle,
- n représente un nombre entier compris entre 1 et 5,
- Mⁿ⁺ représente un cation choisi parmi :
- H⁺,
- un cation métallique divalent, trivalent ou tétravalent, et
- un groupe [HNR₁R₂R₃]ⁿ⁺, dans lequel R₁, R₂, et R₃ représentent indépendamment les uns des autres H ou une chaîne hydrocarbonée saturée ou insaturée, linéaire, ramifié ou cyclique, éventuellement aromatique, éventuellement substituée par un ou plusieurs substituants choisis parmi un hydroxyle et un groupe NR₄R₅, où R₄ et R₅ représentent indépendamment H ou un alkyle éventuellement substitué par un groupe NR₆R₇, où R₆ et R₇ représentent indépendamment H ou un alkyle,
les groupes R₁, R₂, et R₃ pouvant être liés entre eux et former avec l'atome d'azote qui les porte un cycle,
de sorte que la composition hydraulique préparée comprenne de 0,005 à 2% en poids de composé de formule (I).

2. Procédé de préparation d'une composition hydraulique selon la revendication 1, dans laquelle R représente H ou un méthyle.

3. Procédé de préparation d'une composition hydraulique selon la revendication 1 ou 2, dans laquelle Mⁿ⁺ représente [HNR₁R₂R₃]ⁿ⁺ dans lequel au moins l'un des R₁, R₂, et R₃ représente une chaîne hydrocarbonée substituée par un hydroxyle et/ou par un groupe NR₄R₅.

4. Procédé de préparation d'une composition hydraulique selon l'une quelconque des revendications 1 à 3, dans laquelle Mⁿ⁺ représente [HNR₁R₂R₃]ⁿ⁺ et le pKa du cation [HNR₁R₂R₃]ⁿ⁺ est supérieur à 8.

5. Procédé de préparation d'une composition hydraulique selon la revendication 1 ou 2, dans laquelle Mⁿ⁺ représente un cation de métal alcalinoterreux, de préférence choisi parmi un cation magnésium, calcium et baryum.

6. Procédé de préparation d'une composition hydraulique selon l'une quelconque des revendications 1 à 5, dans lequel la composition hydraulique comprenant un liant hydraulique, au moins un granulat, de l'eau et un superplastifiant.

7. Procédé de préparation d'une composition hydraulique selon la revendication 6, comprenant les étapes consistant à :
- mélanger un composé de formule (I) avec de l'eau, puis
- mélanger le mélange obtenu avec un liant hydraulique, au moins un granulat, et éventuellement un superplastifiant.

8. Procédé de préparation d'une composition hydraulique selon la revendication 6, comprenant les étapes consistant à :
- mélanger un composé de formule (I) avec un liant hydraulique, puis
- mélanger le mélange obtenu avec au moins un granulat, de l'eau et éventuellement un superplastifiant.

9. Procédé de préparation d'une composition hydraulique selon la revendication 8, dans lequel le liant hydraulique est du ciment et le mélange du composé de formule (I) avec le ciment est effectué lors du broyage du ciment.

10. Procédé de préparation d'une composition hydraulique selon la revendication 6, comprenant les étapes consistant à :
- mélanger un composé de formule (I) avec un superplastifiant, puis
- mélanger le mélange obtenu avec un liant hydraulique, au moins un granulat et de l'eau.

11. Procédé de préparation d'une composition hydraulique selon la revendication 6, comprenant les étapes consistant à :
- mélanger un composé de formule (I) avec au moins un granulat, puis
- mélanger le mélange obtenu avec un liant hydraulique, de l'eau, et éventuellement un superplastifiant.

12. Composition hydraulique comprenant un liant hydraulique, au moins un granulat, de l'eau et un superplastifiant et comprenant en outre de 0,005 à 2% en poids de composé de formule (I) telle que définie dans l'une quelconque des revendications 1 à 5.

13. Composition hydraulique selon la revendication 12, où la composition hydraulique est un béton ou un mortier.

14. Utilisation de 0,005 à 2% en poids d'un composé de formule (I) telle que définie dans l'une quelconque des revendications 1 à 5 par rapport au poids de composition hydraulique pour inerter les argiles de ladite composition hydraulique.

## Patentansprüche

1. Verfahren zum Herstellen einer hydraulischen Zusammensetzung, aufweisend einen Schritt bestehend aus dem Inkontaktbringen einer hydraulischen Zusammensetzung oder eines Bestandteils einer hydraulischen Zusammensetzung mit einer Verbindung der folgenden Formel (I):
R-COO⁻, (Mⁿ⁺)_{1/n} (I)
wobei:
- R eine Gruppe darstellt, die aus H, einem Alkyl und einem Phenyl ausgewählt ist,
- n eine ganze Zahl zwischen einschließlich 1 und 5 ist,
- Mⁿ⁺ ein Kation darstellt, ausgewählt aus:
- H⁺,
- einem zweiwertigen, dreiwertigen oder vierwertigen Metallkation, und
- einer Gruppe [HNR₁R₂R₃]ⁿ⁺, wobei R₁, R₂ und R₃ unabhängig voneinander H oder eine Kohlenwasserstoffkette darstellen, die gesättigt oder ungesättigt, linear, verzweigt oder cyclisch, gegebenenfalls aromatisch, gegebenenfalls substituiert mit einem oder mehreren Substituenten, ausgewählt aus einem Hydroxyl und einer Gruppe NR₄R₅, wobei R₄ und R₅ unabhängig voneinander H oder ein Alkyl darstellen, das gegebenenfalls mit einer Gruppe NR₆R₇ substituiert ist, wobei R₆ und R₇ unabhängig voneinander H oder ein Alkyl darstellen,
wobei die Gruppen R₁, R₂ und R₃ miteinander verbunden sein und mit dem sie tragenden Stickstoffatom einen Ring bilden können,
derart, dass die hergestellte hydraulische Zusammensetzung 0,005 bis 2 Gew.-% der Verbindung der Formel (I) aufweist.

2. Verfahren zum Herstellen einer hydraulischen Zusammensetzung gemäß Anspruch 1, wobei R H oder ein Methyl darstellt.

3. Verfahren zum Herstellen einer hydraulischen Zusammensetzung gemäß Anspruch 1 oder 2, wobei Mⁿ⁺ [HNR₁R₂R₃]ⁿ⁺ darstellt, wobei mindestens eines von R₁, R₂ und R₃ eine Kohlenwasserstoffkette darstellt, die durch ein Hydroxyl und/oder durch eine Gruppe NR₄R₅ substituiert ist.

4. Verfahren zum Herstellen einer hydraulischen Zusammensetzung gemäß einem der Ansprüche 1 bis 3, wobei Mⁿ⁺ [HNR₁R₂R₃]ⁿ⁺ darstellt und der pKa des Kations [HNR₁R₂R₃]ⁿ⁺ größer als 8 ist.

5. Verfahren zum Herstellen einer hydraulischen Zusammensetzung gemäß Anspruch 1 oder 2, wobei Mⁿ⁺ ein Erdalkalimetallkation wiedergibt, vorzugsweise ausgewählt aus einem Magnesiumkation, einem Calciumkation und einem Bariumkation.

6. Verfahren zum Herstellen einer hydraulischen Zusammensetzung gemäß einem der Ansprüche 1 bis 5, wobei die hydraulische Zusammensetzung ein hydraulisches Bindemittel, mindestens ein Granulat, Wasser und ein Fließmittel aufweist.

7. Verfahren zum Herstellen einer hydraulischen Zusammensetzung gemäß Anspruch 6, aufweisend die Schritte bestehend aus:
- Mischen einer Verbindung der Formel (I) mit Wasser, dann
- Mischen der resultierenden Mischung mit einem hydraulischen Bindemittel, mindestens einem Granulat und gegebenenfalls einem Fließmittel.

8. Verfahren zum Herstellen einer hydraulischen Zusammensetzung gemäß Anspruch 6, aufweisend die Schritte bestehend aus:
- Mischen einer Verbindung der Formel (I) mit einem hydraulischen Bindemittel, dann
- Mischen der resultierenden Mischung mit mindestens einem Granulat, Wasser und gegebenenfalls einem Fließmittel.

9. Verfahren zum Herstellen einer hydraulischen Zusammensetzung gemäß Anspruch 8, wobei das hydraulische Bindemittel Zement ist und das Mischen der Verbindung der Formel (I) mit dem Zement während des Mahlens des Zements durchgeführt wird.

10. Verfahren zum Herstellen einer hydraulischen Zusammensetzung gemäß Anspruch 6, aufweisend die Schritte bestehend aus:
- Mischen einer Verbindung der Formel (I) mit einem Fließmittel, dann
- Mischen der resultierenden Mischung mit einem hydraulischen Bindemittel, mindestens einem Granulat und Wasser.

11. Verfahren zum Herstellen einer hydraulischen Zusammensetzung gemäß Anspruch 6, aufweisend die Schritte bestehend aus:
- Mischen einer Verbindung der Formel (I) mit mindestens einem Granulat, dann
- Mischen der resultierenden Mischung mit einem hydraulischen Bindemittel, Wasser und gegebenenfalls einem Fließmittel.

12. Hydraulische Zusammensetzung, die ein hydraulisches Bindemittel, mindestens ein Granulat, Wasser und ein Fließmittel aufweist und die ferner 0,005 bis 2 Gew.-% einer Verbindung der Formel (I), wie sie gemäß einem der Ansprüche 1 bis 5 definiert ist, aufweist.

13. Hydraulische Zusammensetzung gemäß Anspruch 12, wobei die hydraulische Zusammensetzung ein Beton oder ein Mörtel ist.

14. Verwendung von 0,005 bis 2 Gew.-% einer Verbindung der Formel (I), wie sie gemäß einem der Ansprüche 1 bis 5 definiert ist, im Verhältnis zu dem Gewicht der hydraulischen Zusammensetzung, zum Inertisieren der Tone der hydraulischen Zusammensetzung.

## Claims

1. A method for preparing a hydraulic composition comprising a step consisting of putting a hydraulic composition or a constituent of a hydraulic composition in contact with a compound of the following formula (I):
R-COO⁻, (Mⁿ⁺)_{1/n} (I)
wherein :
- R represents a group selected from H, an alkyl and a phenyl,
- n represents an integer comprised between 1 and 5,
- Mⁿ⁺ represents a cation selected from :
- H⁺,
- a divalent, trivalent or tetravalent metal cation, and
- a group [HNR₁R₂R₃]ⁿ⁺, wherein R₁, R₂, and R₃ represent independently of each other, H or a linear, branched or cyclic, saturated or unsaturated hydrocarbon chain, optionally aromatic, optionally substituted with one or several substituents selected from a hydroxyl and a group NR₄R₅, wherein R₄ and R₅ represent independently H or an alkyl optionally substituted with a group NR₆R₇, wherein R₆ and R₇ represent independently H or an alkyl,
it being understood that the groups R₁, R₂, and R₃ may be bound together and form a ring with the nitrogen atom bearing them,
so that the prepared hydraulic composition comprises from 0.005 to 2% by weigh of compound of formula (I).

2. The method for preparing a hydraulic composition according to claim 1, wherein R represents H or a methyl.

3. The method for preparing a hydraulic composition according to claim 1 or 2, wherein Mⁿ⁺ represents [HNR₁R₂R₃]ⁿ⁺ wherein at least one of the R₁, R₂, and R₃ represents a hydrocarbon chain substituted with a hydroxyl and/or with a group NR₄R₅.

4. The method for preparing a hydraulic composition according to any of claims 1 to 3, wherein Mⁿ⁺ represents [HNR₁R₂R₃]ⁿ⁺ and the pKa of the cation [HNR₁R₂R₃]ⁿ⁺ is greater than 8.

5. The method for preparing a hydraulic composition according to claim 1 or 2, wherein Mⁿ⁺ represents an earth alkaline metal cation, preferably selected from a magnesium, calcium and barium cation.

6. The method for preparing a hydraulic composition according to any of claims 1 to 5, wherein the hydraulic composition comprises a hydraulic binder, at least one granulate, water and a superplasticizer.

7. The method for preparing a hydraulic composition according to claim 6, comprising the steps consisting of:
- mixing a compound of formula (I) with water, and then
- mixing the obtained mixture with a hydraulic binder, at least one granulate and optionally a superplasticizer.

8. The method for preparing a hydraulic composition according to claim 6, comprising the steps:
- mixing a compound of formula (I) with a hydraulic binder, and then
- mixing the obtained mixture with at least one granulate, with water and optionally a superplasticizer.

9. The method for preparing a hydraulic composition according to claim 8, wherein the hydraulic binder is cement and the mixing of the compound of formula (I) with the cement is carried out during grinding of the cement.

10. The method for preparing a hydraulic composition according to claim 6, comprising the steps:
- mixing a compound of formula (I) with a superplasticizer, and then
- mixing the obtained mixture with a hydraulic binder, at least one granulate and water.

11. The method for preparing a hydraulic composition according to claim 6, comprising the steps:
- mixing a compound of formula (I) with at least one granulate, and then
- mixing the obtained mixture with a hydraulic binder, water and optionally a superplasticizer.

12. A hydraulic composition comprising a hydraulic binder, at least one granulate, water and a superplasticizer and further comprising from 0.005 to 2% by weight of a compound of formula (I) as defined in any of claims 1 to 5.

13. The hydraulic composition according to claim 12, wherein the hydraulic composition is a concrete or a mortar.

14. The use of from 0,005 to 2% by weight of a compound of formula (I) as defined in any of claims 1 to 5, with respect to the weight of hydraulic composition, for inerting clays of a said hydraulic composition.
